# EUROPEAN PATENT APPLICATION

(11) **EP 1 422 464 A1**
(43) Date of publication of application: **26.05.2004**
(21) Application number: 02079916.9
(22) Date of filing: 20.11.2002
(51) Int. Cl.: F16L 37/127

(54) **Hook latch for connection of plastic pipes**

(71) Applicant: Arili Plastik San. A.S., Istanbul (TR)
(72) Inventor: Yayla, Pasa, Istanbul (TR)
(74) Representative: Balcin, Ayhan

(57) **Abstract**

A latch coupling for connecting plastic-based pipes, comprising; a latch (5) having a swinging segment (6) and an engaging segment (8) having a hook (9) at the tip thereof and a joint (7) placed substantially in the middle of these two segments (6,8) characterized in that said engaging segment (8) comprises substantially outwardly curved formation.

## Description

### TECHNICAL FIELD

This invention relates to a latch coupling for connecting plastic-based pipes and particularly relates to a latch coupling comprising a latch having an outwardly curved segment for improving second moment of area capabilities thereof, particularly under substantially high pressures of the pipe connection.

Plastic-based pipe assemblies are widely used in various areas and particularly in agriculture for irrigating the field. Since the field to be irrigated is usually immense in size, plastic pipes are connected by means of various means to one another for securing the water flow continuity through the pipes.

One of the most preferable means for pipe connections is the kind that comprising latch coupling. A latch of a coupling comprises two segments, one for swinging (opening and closing) and the other for engaging of the pipe to be connected and these segments are divided by a joint.

Furthermore the engaging segment comprises a hook at the tip for securing the engagement between the male and female parts of the overall pipe connection. Perhaps the most important segment is the one engaging segment, since this segment should be structurally stable against the forces induced by the pressure generated in the pipes.

### BACKGROUND ART

The present invention concerns a latch coupling used for connecting plastic-based pipes, of the kind comprising a latch having a swinging segment and an engaging segment having a hook at the tip thereof and a joint placed substantially in the middle of these two segments.

Such a latch coupling is well-known from the art and practiced by many practitioners widely. For achieving a robust connection between the plastic pipes, the number of latches is held two. The basic idea for employing a dual type latches is to accommodate uniform reaction forces on the periphery of the connection in return to the forces generated in the pipe due to fluid pressure. However, the plastic pipe connection arrangements having two latches cannot suggest a robust structure particularly in the cases where the internal pressure of the fluid flowing through the pipe is in high levels.

Furthermore, as noted by the person skilled in the art, the most functional region of a latch coupling is the engaging segment of the latch since in a given pipe connection arrangement this segment serves as a continuation means between the male and female parts of the pipe connection. Owing to this nature of a pipe connection, the engaging segment of the pipe connection is constantly exerted upon the forces induced by the internal pressure of the fluid inside the pipes. The latch couplings in the market include engaging segments having substantially flat geometry which leads to a weak construction capabilities in terms of their function. In particular, the practitioners cannot achieve to connect the pipes having relatively large diameters such as over than 110 mm., since the force induced by the internal pressure cannot be reacted by the geometry of the engaging segment and failures take place like breaking of the latches etc.

### TECHNICAL PROBLEM TO BE SOLVED

The present invention proposes to provide a latch coupling, for plastic-based pipe connections of the above-mentioned kind which can react the forces induced by the relatively high internal pressure fluid flowing through the plastic pipes. Therefore, the latch coupling in the scope of the present invention facilitates secure plastic-based pipe connections having substantially large diameters such as over 110 mm.

### BRIEF DISCLOSURE OF THE INVENTION

Subject to above-mentioned object, in accordance with the present invention the engaging segment comprises a substantially outwardly curved formation and the number of latches is three.

The engaging segment of the latch having an outwardly curved formation has a number of advantages. Since the engaging segment has an outwardly curved formation, the second moment of area of the section corresponding to the engaging segment is increased leading to decreasing both tension and compression stresses and this turns out to be more reliable pipe connection arrangement in terms of failures thereof i.e. fracture possibility of the latches is minimized particularly under high pressures.

Furthermore, the outwardly curved formation of the engaging segment enables the strain ratios be kept in minimum levels due to minimized tension and compression stresses. Minimizing the strain level secures more robust pipe connection arrangement in terms of leakage of the pipes, particularly under relatively high pressures.

In addition to the outwardly curved engaging segment, the present invention proposes a plastic pipe connection arrangement comprising at least three latches for pipes having relatively large diameters i.e. 110 mm or over 110 mm. By employing at least three latches, pipe connection more uniformly react the forces induced in axial direction having the potential to detach the pipe connection.

### DESCRIPTION OF THE FIGURES

Further objects and advantages of the present invention will become apparent upon reading the following description taken in conjunction with the appended drawings wherein:
Figure 1 illustrates the side cross-sectional view of a pipe connection.
Figure 2A illustrates the top view of the latch coupling.
Figure 2B illustrates the side view of the latch coupling.
Figure 2C illustrates the bottom view of the latch coupling.
Figure 3A illustrates the side cross-sectional view of the female head of the pipe connection arrangement.
Figure 3B illustrates the cross-sectional view of the female head of the pipe connection arrangement.
Figure 4A illustrates the cross-sectional view of the male head of the pipe connection arrangement.
Figure 4B illustrates the side view of the male head of the pipe connection arrangement.

### REFERENCE NUMBERS OF THE COMPONENTS

- 1: First pipe
- 2: Second pipe
- 3: Male head
- 4: Female head
- 5: Latch
- 6: Swinging segment
- 7: Joint
- 8: Engaging segment
- 9: Hook
- 10: Ring
- 11: Sealing
- 12: Flange
- 13: Housing

### DISCLOSURE OF THE INVENTION

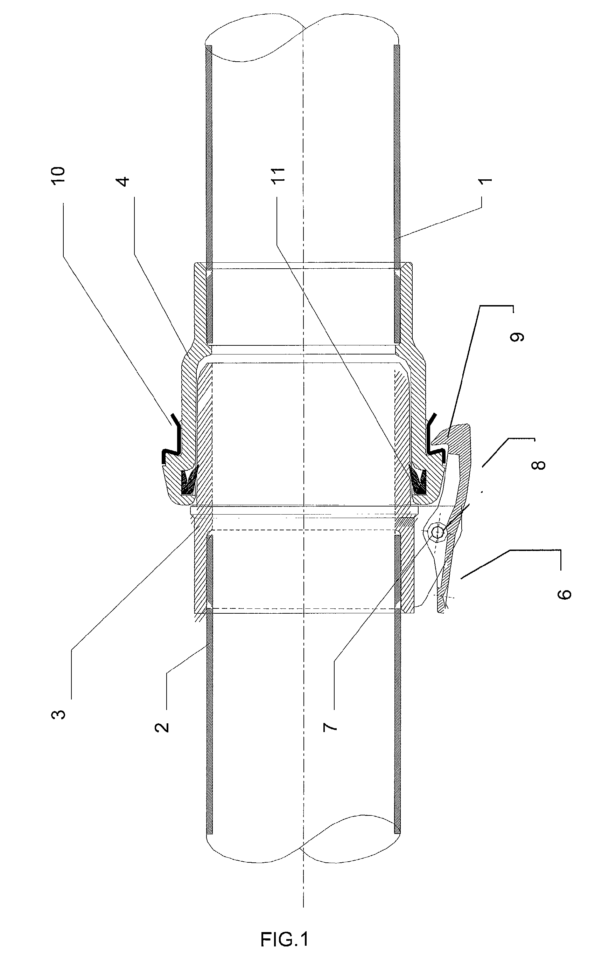

Figure 1 illustrates the side view of a pipe connection. Plastic-based pipes comprising a first pipe (1) and a second pipe (2) are connected to one another through a pipe connection arrangement including a male head (3), a female head (4) and latches (5).

As a figurative description, the first pipe (1) is penetrated into the female head (4) and the second pipe (2) is penetrated into the male head (3) then for overall connection, the male head (3) is disposed into the female head (4).

Since the fluid flowing through the pipes (1,2) has a predetermined pressure, the pipe connection is secured by providing a latch coupling comprising latches (5).

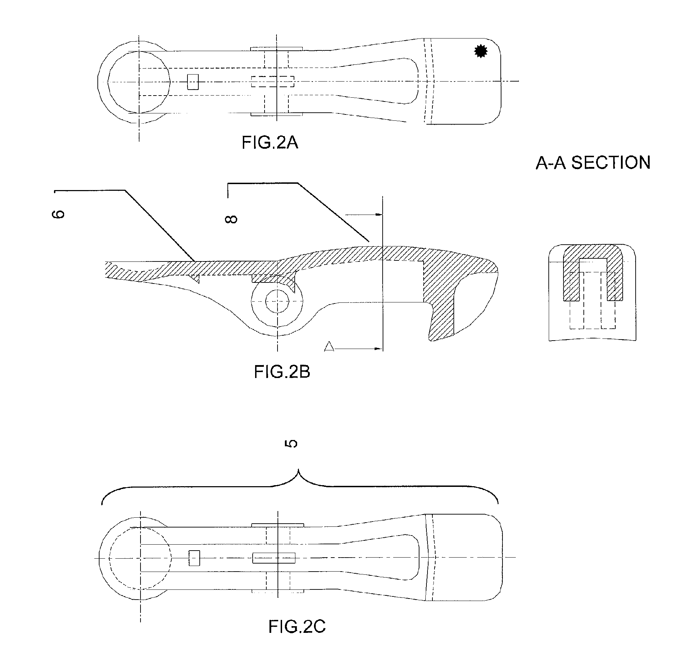

As seen in the group of Figure 2, the latch coupling comprises a latch having a swinging segment (6) upon which external force is exerted for opening and closing the latch coupling (5), an engaging segment (8) having a substantially outwardly curved formation and a joint (7) fixed to a protruding part on the male head (3) and disposed between these segments.

The latch (5) further includes a hook (9) at the tip of the engaging segment (8), and said hook (9) is associated with a ring (10) placed on a flange (12) of the female head (4). Furthermore, a sealing (11) is disposed in a cavity provided inside of the female head (4) for preventing leakage from the pipe connection.

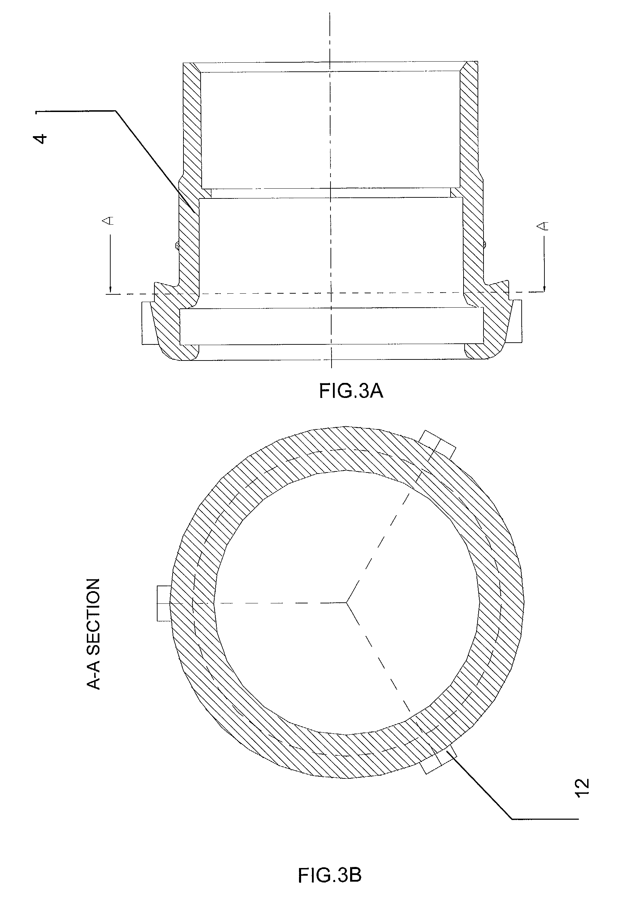

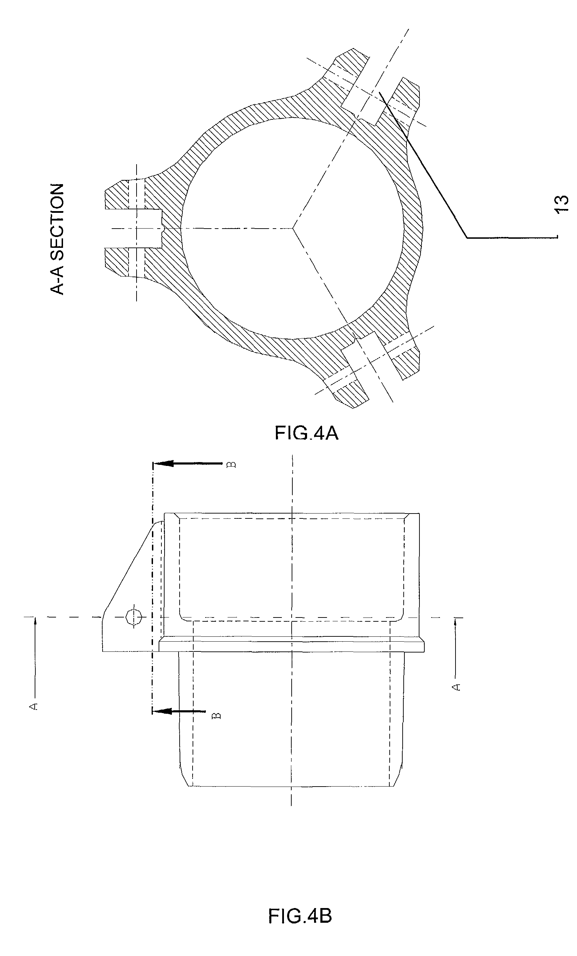

As seen from the group of Figure 3 and Figure 4, female head (4) and male head (3) preferably comprise three latches (5) provided surrounding pipe connection periphery. The joint (7) between the engaging segment (8) and the swinging segment (6) is mounted in housing (13) of the male head (3) and the hook (9) at the tip of the engaging segment (8) is in contact with the flange (12) the number of which is preferably three.

## Claims

1. A latch coupling for connecting plastic-based pipes, comprising; a latch (5) having a swinging segment (6) and an engaging segment (8) having a hook (9) at the tip thereof and a joint (7) placed substantially in the middle of these two segments (6,8) **characterized in that** said engaging segment (8) comprises substantially outwardly curved formation.

2. A latch coupling according to claim 1, wherein the latches (5) are provided circumferentially of the pipe connection in a manner that the number of said latches (5) is at least three.

3. A latch coupling according to any one of the preceding claims, wherein said latch coupling is employed for the connection of pipes having the diameter of at least 110 mm.
